# EUROPEAN PATENT APPLICATION

(11) **EP 2 672 557 A1**
(43) Date of publication of application: **11.12.2013**
(21) Application number: 12742681.5
(22) Date of filing: 31.01.2012
(51) Int. Cl.: H01M 8/02, C04B 35/48, C04B 41/87, H01B 1/06, H01M 8/12

(54) **SOLID ELECTROLYTE MATERIAL AND SOLID OXIDE FUEL CELL PROVIDED WITH SAME**

(30) Priority: 31.01.2011 JP 2011018762
(71) Applicant: Toto Ltd., Fukuoka 802-8601 (JP)
(72) Inventor: SHIMAZU Megumi, Kitakyushu-shi Fukuoka 802-8601 (JP); UENO Akira, Kitakyushu-shi Fukuoka 802-8601 (JP); ABE Toshiya, Kitakyushu-shi Fukuoka 802-8601 (JP); MIYAO Motoyasu, Kitakyushu-shi Fukuoka 802-8601 (JP); HIWATASHI Kenichi, Kitakyushu-shi Fukuoka 802-8601 (JP)
(74) Representative: Witte, Weller & Partner
(86) International application number: PCT/JP2012/052183
(87) International publication number: WO 2012/105579

(57) **Abstract**

Provided is a solid electrolyte material provided which, while maintaining a high oxygen ion conductivity, minimizes the extraction of scandia caused by impurities such as silicon in the fuel gas, and has improved intergranular strength in order to eliminate intergranular fracture caused by crystalline modification. The solid electrolyte material is a zirconia solid electrolyte material having yttria dissolved therein, has cubic crystals as the main ingredient, and is further characterized by having a lanthanoid oxide dissolved therein.

## Description

### Technical Field

The present invention relates to a solid electrolyte material and a solid oxide fuel cell comprising the solid electrolyte material.

### Background Art

Conventionally, solid electrolyte materials such as yttria doped zirconia (hereinafter, referred to as YSZ) have been used in the applications of solid oxide fuel cells (hereinafter, abbreviated as SOFCs) and the like. SOFCs have higher electric power generation efficiencies and higher discharged thermal energy temperatures than other fuel cells, such as phosphoric acid-type fuel cells and molten carbonate-type fuel cells. Hence, SOFCs have attracted attention as a next-generation type energy-saving electric power generation system.

A basic structure of an SOFC includes a solid electrolyte layer, a fuel electrode layer, and an oxygen electrode layer. When a fuel gas such as hydrogen (H₂) flows through and thereby comes into contact with the fuel electrode layer, which faces one surface of the solid electrolyte layer, and an oxidizing agent gas such as the air or oxygen (O₂) flows through and thereby comes into contact with the oxygen electrode layer, which faces an opposite surface of the solid electrolyte layer, oxygen ions (O²⁻) generated in the oxygen electrode layer move through the solid electrolyte layer to the fuel electrode layer, and the O²⁻ react with H₂ in the fuel electrode layer. An electric output can be obtained by this electrochemical reaction.

A solid electrolyte material for an SOFC based on such a reaction mechanism needs to have the following characteristics: (1) high oxygen ion conductivity; (2) excellent long-term durability; (3) high material strength; and the like. Particularly from the viewpoint of long-term durability, the most preferred material is YSZ, among zirconia-based solid electrolyte materials.

For a case where YSZ is used in an SOFC of a type using a solid electrolyte layer as a support, an SOFC is proposed in which alumina is added to the material for enhancing the strength thereof, and further the amount of alumina added is increased in surface layer portions of the solid electrolyte membrane as compared with that in the central portion thereof in consideration of performance (see Japanese Patent Application Publication No. Hei 11-354139).

### Summary of Invention

However, a long-term durability test conducted for several hundred to several thousand hours on a conventional YSZ and the SOFC described in Japanese Patent Application Publication No. Hei 11-354139 has revealed that, when come into contact with the solid electrolyte layer on the fuel electrode layer side, impurities such as Si contained in a fuel gas extract yttria in crystals, and causes crystal transformation (change from cubic crystals to tetragonal crystals) of the solid electrolyte layer. In addition, it was found that powder formation occurred in a potion of the solid electrolyte layer near the fuel electrode layer.

In the long-term durability test conducted for several thousand hours, no powder formation was observed in a portion of the solid electrolyte layer covered with the fuel electrode layer, but crystal transformation occurred in this portion as in the portion where the powder formation occurred. Hence, presumably, powder formation will occur during operation for several tens of thousands hours, and peeling (hereinafter, referred to as powder formation peeling) will occur between the solid electrolyte layer and the fuel electrode layer. If the powder formation peeling occurs, electricity cannot be extracted, and electric power generation is impossible. An SOFC is required to have a lifetime of about 40000 hours in the introduction period, and of about 90000 hours in the spread period. The powder formation peeling shown here is a technical problem which should be solved for introduction to the market.

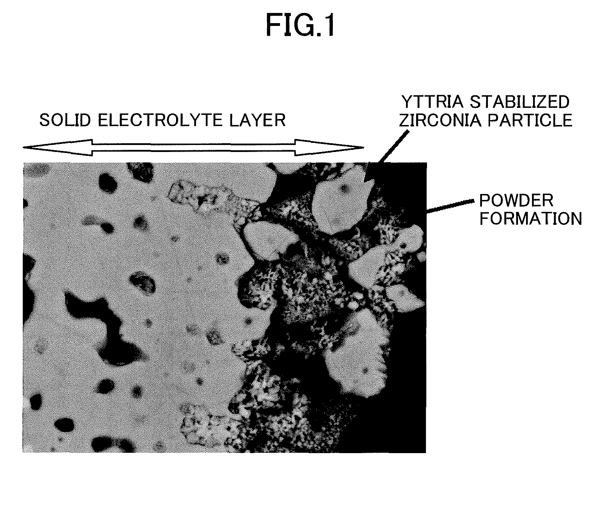

Results of a SEM observation on the powder formation portion showed that particles fell off at grain boundaries, so that the powder formation occurred. This is presumably because the change from the cubic crystals to the tetragonal crystals caused decrease in volume, so that fracture occurred at the grain boundaries (see Fig. 1).

The present inventors provide a solid electrolyte material having an improved strength between particles, in order to suppress the extraction of yttria by impurities such as Si in a fuel gas and to allow no intergranular fracture associated with the crystal transformation, with the high oxygen ion conductivity being maintained.

To solve the above-described problem, a solid electrolyte material according to the present invention is a YSZ solid electrolyte material which mainly exists as cubic crystals, wherein the YSZ solid electrolyte material is further doped with a lanthanoid oxide. Since the YSZ solid electrolyte material is further doped with a lanthanoid oxide, it is possible to suppress the extraction of the stabilizer, yttria, to the outside of the crystals by impurities such as Si contained in a fuel gas and coming into contact with the solid electrolyte layer on the fuel electrode layer side during operation of an SOFC. This is because since the YSZ solid electrolyte material is doped with a lanthanoid oxide, yttrium is more stabilized in the crystals, and becomes more resistant to the extraction to the outside of the crystals.

Note that, the term "a YSZ solid electrolyte material which is further doped with a lanthanoid oxide" used herein is not limited to solid electrolyte materials prepared by doping zirconia with yttria, and then doping it with a lanthanoid oxide. Regarding the solid electrolyte material of the present invention, when zirconia is doped with yttria and a lanthanoid oxide, the doping step may be executed any order and zirconia may be simultaneously doped with the yttria and the lanthanoid oxide as described in Examples.

In a preferred mode of the solid electrolyte material of the present invention, the zirconia is doped with 8 to 15 mol% of the yttria and 1 to 5 mol% of the lanthanoid oxide, relative to the total amount of substances (total molar amount) of the zirconia, the yttria, and the lanthanoid oxide in the solid electrolyte material. The amount of yttria is preferably 8 to 15 mol%, because an amount of less than 8 mol% results in tetragonal crystals, and an amount exceeding 15 mol% may result in rhombohedral crystals, which lowers the oxygen ion conductivity. The amount of the lanthanoid oxide is preferably 1 to 5 mol%, because an amount of less than 1 mol% results in a decreased effect of suppressing the extraction of yttria by impurities such as Si contained in a fuel gas, and an amount exceeding 5 mol% results in formation of tetragonal crystals, which increase the possibility of the crystal transformation.

In another preferred mode of the solid electrolyte material of the present invention, the lanthanoid oxide is ceria. Ceria is preferable because not only ceria suppresses the extraction of yttria by impurities, but also ceria is capable of improving the oxygen ion conductivity of the solid electrolyte material.

In a further preferred mode of the solid electrolyte material of the present invention, more than 1 mol% of alumina is further contained relative to the total amount of substances (total molar amount) of the zirconia, the yttria, and the lanthanoid oxide in the solid electrolyte material. Since alumina is contained, not only it is possible to suppress the extraction of the stabilizer, yttria, to the outside of the crystals by impurities such as Si contained in a fuel gas and coming into contact with the solid electrolyte layer on the fuel electrode layer side during operation of an SOFC, but also the powder formation does not occur even when yttria is extracted to the outside of the crystals. Hence, it is possible to provide an SOFC having a lifetime of 90000 hours, which is required in the spread period. This is because the YSZ doped with the lanthanoid oxide suppresses the extraction of yttria to the outside of the crystals, and the alumina present at grain boundaries of YSZ particles firmly connects the zirconia particles to each other, so that grain boundaries are not fractured even when the volume change associated with the crystal transformation occurs. The alumina amount is preferably more than 1 mol%, because an amount of 1 mol% or less results in a decreased effect of suppressing the intergranular fracture due to the volume change associated with the crystal transformation. In addition, the alumina amount is preferably 5 mol% or less. This is because an alumina amount of 5 mol% or less does not cause decrease in oxygen ion conductivity of the solid electrolyte material, or if some decrease is caused, the decrease can be minimized.

Another mode of the present invention provides a SOFC comprising: a solid electrolyte layer; an oxygen electrode layer provided on one surface of the solid electrolyte layer; and a fuel electrode layer provided on the other surface of the solid electrolyte layer, wherein the solid electrolyte layer is formed of the above-described solid electrolyte material. Since the solid electrolyte layer comprises the solid electrolyte material, it is possible to provide an SOFC having a lifetime of 90000 hours, which is required in the spread period. This is because no powder formation occurs, and no powder formation peeling occurs between the fuel electrode layer and the solid electrolyte layer, even when the stabilizer, yttria, is extracted to the outside of the crystals by impurities such as Si contained in a fuel gas and coming into contact with the solid electrolyte layer on the fuel electrode layer side during operation of the SOFC. In a further preferred mode, the lanthanoid oxide doping at the fuel electrode side of the solid electrolyte layer is higher than the lanthanoid oxide doping at the oxygen electrode side of the solid electrolyte layer. Examples thereof include one in which the lanthanoid oxide doping gradually decreases from the fuel electrode side to the oxygen electrode side, and the like. This makes it possible to minimize the decrease in oxygen ion conductivity of the solid oxide layer as a whole, while preventing the powder formation peeling on the fuel electrode layer side.

In a preferred mode of the SOFC of the present invention, the solid electrolyte layer consists of two layers of a first layer formed at the oxygen electrode layer side and a second layer formed at the fuel electrode layer side, and the lanthanoid oxide doping in the second layer is higher than the lanthanoid oxide doping in the first layer. In addition, the second layer may further contain more than 1 mol% of alumina, and the amount of the alumina in the second layer may be higher than the amount of alumina in the first layer. More preferably, the first layer is not doped with lanthanoid oxide, and contains no alumina. In addition, the first layer may use scandia stabilized zirconia or yttria stabilized zirconia. The SOFC comprising the solid electrolyte layer of the present invention has a high efficiency, and a lifetime of 90000 hours, which is required in the spread period. This is because of the following reason. Specifically, in the second layer on the fuel electrode layer side, the powder formation peeling can be prevented, but the ion conductivity decreases because of the inclusion of alumina and the like. In contrast, in the first layer on the oxygen electrode layer side, the oxygen ion conductivity remains high, and the internal resistance remains small. Hence, the powder formation peeling can be prevented from occurring, while the decrease in oxygen ion conductivity of the solid oxide layer as a whole is minimized.

In a preferred mode of the SOFC of the present invention, the first layer is thicker than the second layer. The SOFC comprising the solid electrolyte layer of the present invention has a high efficiency, and a lifetime of 90000 hours, which is required in the spread period. This is because, since the thickness of the second layer is minimum necessary for preventing the powder formation peeling, the contribution of the high oxygen ion conductivity of the first layer is increased, so that the electric power generation efficiency can be further increased. A minimum necessary thickness of the second layer for preventing the powder formation peeling is, for example, 1 µm or more, and preferably 3 µm or more.

According to the present invention, the powder formation can be suppressed which is associated with crystal transformation of zirconia caused when impurities such as Si contained in a fuel gas come into contact with the solid electrolyte layer on the fuel electrode layer side during operation of an SOFC, and the powder formation peeling can be suppressed which may occur several tens of thousands hours later between the fuel electrode layer and the solid electrolyte layer. Thus, the present invention makes it possible to provide a solid electrolyte material having a lifetime of about 90000 hours, which is required in the spread period of SOFCs, as well as a solid oxide fuel cell comprising the solid electrolyte material.

### Brief Description of Drawings

Fig. 1 is an SEM photograph showing a powder formation phenomenon of a solid electrolyte layer in the present invention.
Fig. 2 is a diagram showing an example of an SOFC of the present invention.
Fig. 3 is a diagram showing the difference in change associated with crystal transformation of a solid electrolyte layer between a conventional case and the present invention.
Fig. 4 is a diagram showing the crystal state of YSZ depending on the Y₂O₃ concentration and the temperature.
Fig. 5 is a diagram showing a best mode of the SOFC of the present invention.
Fig. 6 is a diagram showing a testing apparatus for demonstrating effects of the present invention.

### Description of Embodiments

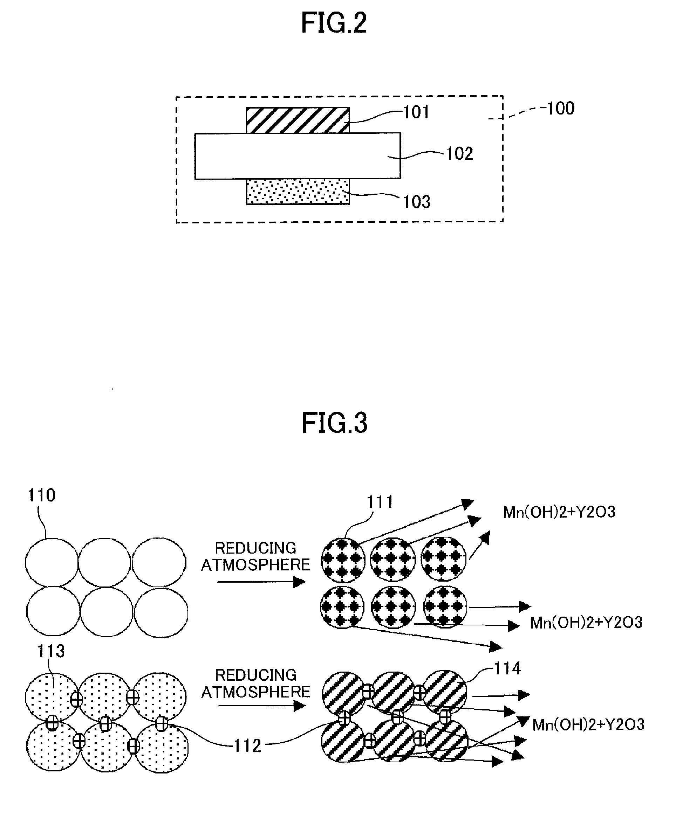

Hereinafter, embodiments of the present invention will be described with reference to the drawings. Fig. 2 is an SOFC of an embodiment of the present invention. An oxygen electrode layer 101 is provided on one surface of a solid electrolyte layer 102, and a fuel electrode layer 103 is provided on the other surface of the solid electrolyte layer 102. Conventionally, YSZ has been mainly used as the solid electrolyte layer 102, from the viewpoints of high oxygen ion conductivity and excellent long-term durability. However, a long-term durability test conducted for several hundred to several thousand hours showed that, in an SOFC using YSZ, yttria in crystals was extracted when impurities such as Si contained in a fuel gas came into contact with the solid electrolyte layer 102 on the fuel electrode layer 103 side, so that crystal transformation (change from the cubic crystals to tetragonal crystals) of the solid electrolyte layer 102 occurred. In addition, powder formation was observed in an uncovered portion of the solid electrolyte layer 102. Hence, presumably, the crystal transformation occurred also in a portion of the solid electrolyte layer 102 covered with the fuel electrode layer 103 in the same manner, and the powder formation peeling will occur between the solid electrolyte layer 102 and the fuel electrode layer 103 during operation for several tens of thousands hours.

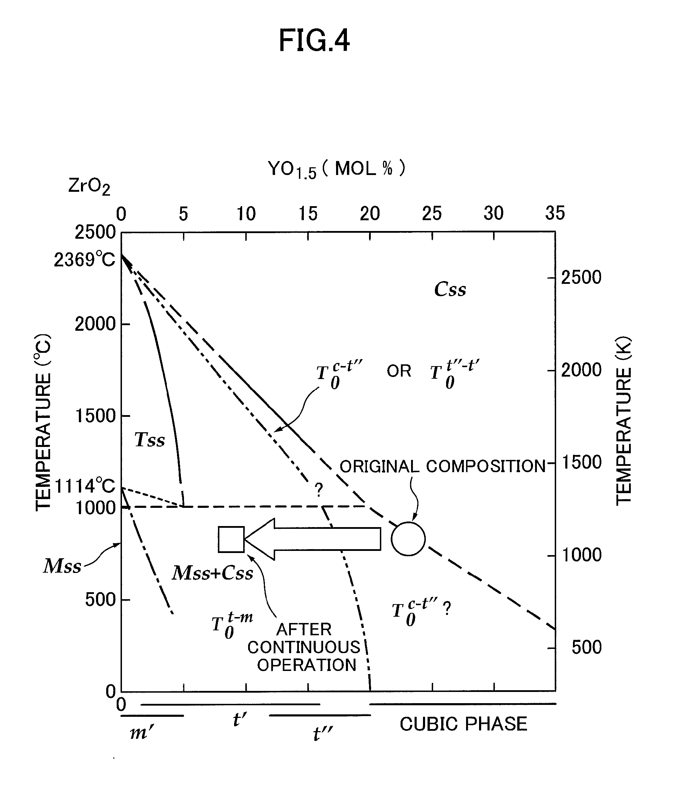

The difference in change associated with the crystal transformation of the solid electrolyte layer 102 between a conventional case and the present invention is described based on Fig. 3. A solid electrolyte layer which has a 10YSZ composition corresponding to that of Comparative Example 1 has a cubic crystal structure 110 at the production thereof. When Si and the like in a fuel gas come into contact with the solid electrolyte layer, yttria (Y₂O₃) serving as a stabilizer is extracted from the crystal phase. Consequently, the crystal phase changes from the cubic crystals (c) 110 to tetragonal crystals (t) 111, as shown in the phase diagram of Fig. 4. The change from the cubic crystals (c) 110 to the tetragonal crystals (t) 111 results in decrease in lattice constants and decrease in volume. Presumably as a result of this, intergranular fracture occurs, and the powder formation as shown in the SEM image of Fig. 1 occurs. In the solid electrolyte material of the present invention, the solid electrolyte material doped with a lanthanoid oxide in order to suppress the extraction of yttria (Y₂O₃) from the crystal phase. For example, cubic crystals (c) 113 having a 10Y0.5CeSZ composition are used. Moreover, even with this composition, the extraction of yttria to the outside of the crystals gradually occurs, and the cubic crystals (c) 113 eventually change to tetragonal crystals (t) 114. Hence, it is preferable to further add alumina 112 in order to prevent the intergranular fracture even after the crystal transformation occurs due to the extraction of yttria, and thereby prevent the powder formation from occurring.

A preferred composition of the solid electrolyte material is such that the yttria doping is 8 to 15 mol% and the lanthanoid oxide doping is 1 to 5 mol%, relative to the total amount of substances (total molar amount) of the zirconia, the yttria, and the lanthanoid oxide in the solid electrolyte material. It is more preferable that more than 1 mol% of alumina be further contained relative to the total amount of substances (total molar amount) of the zirconia, the yttria, and the lanthanoid oxide in the solid electrolyte material. The amount of yttria is preferably 8 to 15 mol%, because an amount of less than 8 mol% results in tetragonal crystals, and an amount exceeding 15 mol% may result in rhombohedral crystals, which lowers the oxygen ion conductivity. The amount of the lanthanoid oxide is preferably 1 to 5 mol%, because an amount of less than 1 mol% results in a decreased effect of suppressing the extraction of yttria by impurities such as Si contained in a fuel gas, and an amount exceeding 5 mol% increases the possibility of the crystal transformation because of the formation of tetragonal crystals. The alumina is contained in an amount of more than 1 mol% because an amount of 1 mol% or less results in a decreased effect of suppressing the intergranular fracture due to the volume change associated with the crystal transformation.

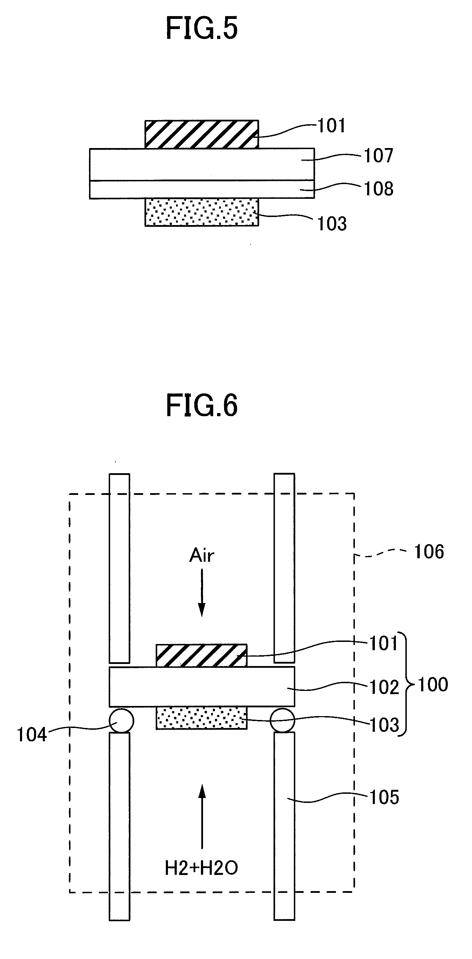

A major object of the solid electrolyte layer in the SOFC of the present invention is to prevent degradation due to impurities such as Si in a fuel gas. From the viewpoints of increasing the efficiency and of a high durability of the SOFC, the solid electrolyte layer preferably comprises two layers of a first layer 107 formed on the oxygen electrode layer 101 side and a second layer 108 formed on the fuel electrode layer side 103, wherein the second layer 108 on the fuel electrode layer 103 side is formed of a solid electrolyte material in which the YSZ is doped with the lanthanoid oxide, and which has a composition further containing alumina, and the first layer 107 on the oxygen electrode layer 101 side is formed of a solid electrolyte material having a YSZ composition with a high oxygen ion conductivity (see Fig. 5). From the viewpoint of high efficiency, the first layer is more preferably thicker than the second layer.

The fuel electrode layer 103 in the SOFC of the present invention only needs to satisfy the following requirements: having a high electrical conductivity, which enables an electric output to be obtained by an electrochemical reaction in which O²⁻ react with H₂; being chemically stable; and having a coefficient of thermal expansion close to that of the solid electrolyte layer 102. Conventionally used fuel electrode layers can be employed without any particular limitation. Typical examples thereof include a cermet of Ni and ScSZ, a cermet of Ni and yttria stabilized zirconia (hereinafter, referred to as YSZ), a cermet of Ni and cerium oxide, and the like.

The oxygen electrode layer 101 in the SOFC of the present invention only needs to satisfy the following requirements: having a high electrical conductivity and having a high catalytic activity for converting an oxidizing agent gas such as oxygen (O₂) into oxygen ions (O²⁻) ; being chemically stable; and having a coefficient of thermal expansion close to that of the solid electrolyte layer 102. Conventionally used oxygen electrode layers can be employed without any particular limitation. Examples thereof include strontium doped lanthanum manganite (hereinafter, referred to as LSM), strontium doped lanthanum ferrite (hereinafter, referred to as LSF), strontium and iron doped lanthanum cobaltite (hereinafter, referred to as LSCF), and the like.

In the production of the solid electrolyte material of the present invention, any method generally employed in this technical field may be used without any particular limitation. For example, the solid electrolyte material of the present invention can be produced as follows, although the method is not limited to this one. Specifically, particles of zirconia, particles of yttria, and particles of the lanthanoid oxide are mixed with each other at a given blending ratio; the mixture is ground in a grinding machine such as a ball mill, and then sintered; the sintered material is ground in a grinding machine such as a ball mill; then the ground material is mixed with alumina and a binder component; and the mixture is molded and sintered.

In the production of the SOFC of the present invention, any method generally employed in this technical field may be used without any particular limitation. For example, the SOFC of the present invention can be produced by forming an oxygen electrode layer on one surface of the solid electrolyte material of the present invention and a fuel electrode layer on the other surface thereof by the screen printing method or the like, followed by sintering.

The SOFC of the present invention may be of any type such as the flat-plate vertical-stripe type, the flat-plate lateral-stripe type, the flat tubular type, the tubular vertical-stripe type, the tubular lateral-stripe type, or the microtube type.

### [Examples]

### (Example 1)

A test conducted by fabricating a cell of the type shown in Fig. 2 is described. A ZrO₂ raw material (average particle diameter: 0.3 µm), a Y₂O₃ raw material (average particle diameter: 0.3 µm), and a CeO₂ raw material (average particle diameter: 0.3 µm) were weighed to give a 10Y0.5CeSZ composition represented by the general formula of 89.5 mol% (ZrO₂) -10 mol% (Y₂O₃)-0.5 mol% (CeO₂). These raw materials were wet blended in an ethanol solvent for 50 hr, and dried and ground. Then, the blend was sintered at 1200°C. The sintered material was ground into a powder. Then, 5 wt% of a binder PVA was added to the powder, followed by mixing in a mortar. The powder containing the PVA was press molded at 50 MPa, and sintered at 1450°C for 5 hr. Thus, a dense solid electrolyte layer having a 10Y0.5CeSZ composition was obtained. After the layer was polished to a thickness of about 200 µm, a film of LSM (average particle diameter: 2 µm) was formed as an oxygen electrode layer by the screen printing so as to give a thickness of 20 µm after sintering, and a film of 40 wt% NiO-60 wt% YSZ (average particle diameter: 2 µm) was formed as a fuel electrode layer on an opposite surface by the screen printing so as to form a cermet of Ni and YSZ and to give a thickness of 20 µm after sintering. Then, sintering was carried out at 1400°C for 2 hr.

### (Example 2)

Example 2 was conducted in the same manner as in Example 1, except that a dense solid electrolyte layer having a 10Y0.5CeSZ1Al composition was obtained as follows. Specifically, together with a binder PVA, Al₂O₃ in an amount equivalent to 1 mol% relative to the total amount of substances (total molar amount) of the zirconia, the yttria, and the lanthanoid oxide in the solid electrolyte material was mixed with a powder having the 10Y0.5CeSZ composition represented by the general formula of 89.5 mol% (ZrO₂) -10 mol% (Y₂O₃) -0.5 mol% (CeO₂).

### (Example 3)

Example 3 was conducted in the same manner as in Example 2, except that a dense solid electrolyte layer having a 10Y0.5CeSZ1.5Al composition was obtained as follows. Specifically, with a 10Y0.5CeSZ composition represented by the general formula of 89.5 mol% (ZrO₂)-10 mol% (Y₂O₃)-0.5 mol% (CeO₂), Al₂O₃ was mixed in an amount equivalent to 1.5 mol% relative to the total amount of substances (total molar amount) of the zirconia, the yttria, and the lanthanoid oxide in the solid electrolyte material.

### (Example 4)

Example 4 was conducted in the same manner as in Example 1, except that a dense solid electrolyte layer having a 10Y1CeSZ composition represented by the general formula of 89 mol% (ZrO₂)-10 mol% (Y₂O₃) -1 mol% (CeO₂) was obtained.

### (Example 5)

Example 5 was conducted in the same manner as in Example 1, except that a dense solid electrolyte layer having a 10Y2CeSZ composition represented by the general formula of 88 mol% (ZrO₂) -10 mol% (Y₂O₃) -2 mol% (CeO₂) was obtained.

### (Example 6)

Example 6 was conducted in the same manner as in Example 1, except that a dense solid electrolyte layer having a 10Y5CeSZ composition represented by the general formula of 85 mol% (ZrO₂) -10 mol% (Y₂O₃) -5 mol% (CeO₂) was obtained.

### (Example 7)

Example 7 was conducted in the same manner as in Example 1, except that a dense solid electrolyte layer having a 10Y6CeSZ composition represented by the general formula of 84 mol% (ZrO₂) -10 mol% (Y₂O₃) -6 mol% (CeO₂) was obtained.

### (Example 8)

Example 8 was conducted in the same manner as in Example 1, except that a dense solid electrolyte layer having a 7Y1CeSZ composition represented by the general formula of 92 mol% (ZrO₂) -7 mol% (Y₂O₃) -1 mol% (CeO₂) was obtained.

### (Example 9)

Example 9 was conducted in the same manner as in Example 1, except that a dense solid electrolyte layer having an 8Y1CeSZ composition represented by the general formula of 91 mol% (ZrO₂) -8 mol% (Y₂O₃) -1 mol% (CeO₂) was obtained.

### (Example 10)

Example 10 was conducted in the same manner as in Example 1, except that a dense solid electrolyte layer having a 15Y1CeSZ composition represented by the general formula of 84 mol% (ZrO₂) -15 mol% (Y₂O₃) -1 mol% (CeO₂) was obtained.

### (Example 11)

Example 11 was conducted in the same manner as in Example 1, except that a dense solid electrolyte layer having a 16Y1CeSZ composition represented by the general formula of 83 mol% (ZrO₂) -16 mol% (Y₂O₃) -1 mol% (CeO₂) was obtained.

### (Comparative Example 1)

Comparative Example 1 was conducted in the same manner as in Example 1, except that a dense solid electrolyte layer having a 10YSZ composition represented by the general formula of 90 mol% (ZrO₂) -10 mol% (Y₂O₃) was obtained.

### (Comparative Example 2)

Comparative Example 2 was conducted in the same manner as in Example 2, except that a dense solid electrolyte layer having a 10YSZ0.5Al composition was obtained as follows. Specifically, with a 10YSZ composition represented by the general formula of by the general formula of 90 mol% (ZrO₂) -10 mol% (Y₂O₃), Al₂O₃ was mixed in an amount equivalent to 0.5 mol% relative to the total amount of substances (total molar amount) of the zirconia, the yttria, and the lanthanoid oxide in the solid electrolyte material.

### (Testing Method)

Fig. 6 schematically shows a testing apparatus. A glass seal (SiO₂+B₂O₃) 104 was placed in an apparatus held by a zirconia tube 105, and the fabricated SOFC 100 was placed on the glass seal 104. Moreover, a zirconia tube 105 was placed on an upper surface of the SOFC 100. While the air was passed on the upper surface of the SOFC of each of Examples 1 to 11 and Comparative Examples 1 and 2, and 97% N₂+3% H₂ was passed on a lower surface thereof, the temperature of an electric furnace 106 was raised to 1000°C. While the air was passed on the upper surface (on the first layer side) of the SOFC, and a fuel gas (70% H₂+30% H₂O) was passed on the lower surface thereof, the temperature was kept at 1000°C for 600 hr. Then, while the air was passed on the upper surface (on the first layer side) of the SOFC, and 97% N₂+3% H₂ was passed on the lower surface thereof, the temperature was lowered to room temperature.

### (Analysis 1)

After the SOFC 100 was peeled off from the glass seal 104, a surface of the solid electrolyte layer 102 of the SOFC 100, the surface having been in contact with the glass seal 104, was analyzed by SEM and Raman spectroscopy, and the presence or absence of powder formation and the crystal phase were examined. In addition, the crystal phases of all the SOFCs were checked by Raman spectroscopy before the test.

The SEM observation was carried out by using S-4100 of Hitachi High-Technologies Co. , Japan at an acceleration voltage of 15 kV and at a 1000-fold magnification. In the Raman spectroscopy, mode of vibration of Zr-O on the surface of the electrolyte was analyzed by using NRS-2100 of JASCO Co., Japan. The measurement was conducted with a detector equipped with a triple monochromator at a wavenumber resolution of 1 cm⁻¹ with an observation spot of 8 µm in diameter, and an excitation wavelength of 523 nm.

**[Table 1]**

| | Composition | Initial stage Crystal phase | 600 hr later Powder formation | Crystal phase |
|---|---|---|---|---|
| Example 1 | 10Y0.5CeSZ | C | Absent | C+t |
| Example 2 | 10Y0.5CeSZ1Al | C | Absent | C+t |
| Example 3 | 10Y0.5CeSZ1.5Al | C | Absent | C |
| Example 4 | 10Y1CeSZ | C | Absent | C |
| Example 5 | 10Y2CeSZ | C | Absent | C |
| Example 6 | 10Y5CeSZ | C | Absent | C |
| Example 7 | 10Y6CeSZ | C | Absent | C+t |
| Example 8 | 7Y1CeSZ | C+t | Absent | t |
| Example 9 | 8Y1CeSZ | C | Absent | C |
| Example 10 | 15Y1CeSZ | C | Absent | C |
| Example 11 | 16Y1CeSZ | C+r | Absent | C+r |
| Comp. Ex. 1 | 10YSZ | C | Present | t |
| Comp. Ex. 2 | 10YSZ0.5Al | C | Present | t |

Table 1 shows the test results. The notation is as follows: c: cubic crystals, t: tetragonal crystals, and r: rhombohedral crystals. The powder formation was observed in each of Comparative Examples 1 and 2. In contrast, no powder formation was observed in any of Examples 1 to 11. This demonstrated that the powder formation can be suppressed by employing the composition of the present invention. In addition, the crystal phase was transformed to the t phase in each of the Examples 1, 2, 7, and 8, and the r phase, which causes phase transformation at around 630°C, partially remained in Example 11. In contrast, the crystal phase remained the c phase in each of Examples 3, 4, 5, 6, 9, and 10. A comparison among Examples 4 to 11 shows that the compositions employed in Examples 4, 5, 6, 9, and 10 are more preferable, and that it is more preferable that the yttria doping is 8 to 15 mol% and the lanthanoid oxide doping is 1 to 5 mol%. Moreover, a comparison among Examples 1 to 3 shows that the composition of Example 3 containing more than 1 mol% of alumina is more preferable, because the crystal phase remained the c phase in Example 3.

### (Analysis 2)

The SOFCs of Examples 3 and 4 and Comparative Example 1 were analyzed as follows. Specifically, the fuel electrode layer 103 was peeled off, and the surface of the solid electrolyte layer 102 having been covered with the fuel electrode layer 103 was analyzed by SEM and Raman spectroscopy.

**[Table 2]**

| | Composition | Powder formation | Cracks | Crystal phase |
|---|---|---|---|---|
| Example 3 | 10Y0.5CeSZ1.5Al | Absent | Absent | C |
| Example 4 | 10Y1CeSZ | Absent | Absent | C |
| Comp. Ex. 1 | 10YSZ | Absent | Present | t |

Table 2 shows the results of the analysis. No powder formation was observed in the solid electrolyte layers covered with the fuel electrode layers. However, the crystal phase had already changed to the t phase in Comparative Example 1, and cracks were observed at grain boundaries. On the other hand, in Examples 3 and 4, no powder formation was observed, the crystal phase was unchanged, and no cracks were observed at grain boundaries. In the case of Comparative Example 1, it is suggested that the powder formation may occur during a further long time operation, and the powder formation peeling may occur between the fuel electrode layer 103 and the solid electrolyte layer 102.

### Regarding Lanthanoid Oxides other than CeO₂

### (Example 12)

Example 12 was conducted in the same manner as in Example 1, except that a dense solid electrolyte layer having a 10Y2SmSZ composition represented by the general formula of by the general formula of 88 mol% (ZrO₂) -10 mol% (Y₂O₃) -2 mol% (Sm₂O₃) was obtained.

### (Example 13)

Example 13 was conducted in the same manner as in Example 1, except that a dense solid electrolyte layer having a 10Y2YbSZ composition represented by the general formula of by the general formula of 88 mol% (ZrO₂) -10 mol% (Y₂O₃) -2 mol% (Yb₂O₃) was obtained.

### (Example 14)

Example 14 was conducted in the same manner as in Example 1, except that a dense solid electrolyte layer having a 10Y2LaSZ composition represented by the general formula of by the general formula of 88 mol% (ZrO₂) -10 mol% (Y₂O₃) -2 mol% (La₂O₃) was obtained.

While the air was passed on an upper surface of the SOFC of each of Examples 12 to 14, and 97% N₂+3% H₂ was passed on a lower surface thereof by using the testing apparatus shown in Fig. 6, the temperature of the electric furnace 106 was raised to 1000°C. While the air was passed on the upper surface (on the first layer side) of the SOFC, and a fuel gas (70% H₂+30% H₂O) was passed on the lower surface thereof, the temperature was kept at 1000°C for 600 hr. Then, while the air was passed on the upper surface (on the first layer side) of the SOFC, and 97% N₂+3% H₂ was passed on the lower surface thereof, the temperature was lowered to room temperature. A surface of the solid electrolyte layer 102 of the SOFC 100, the surface having been in contact with the glass seal 104, was analyzed by SEM and Raman spectroscopy in the same manner, and the presence or absence of powder formation and the crystal phase were examined.

**[Table 3]**

| | Composition | Initial stage Crystal phase | 600 hr later Powder formation | Crystal phase |
|---|---|---|---|---|
| Example 5 | 10Y2CeSZ | C | Absent | C |
| Example 12 | 10Y2SmSZ | C | Absent | C |
| Example 13 | 10Y2YbSZ | C | Absent | C |
| Example 14 | 10Y2LaSZ | C | Absent | C |

Table 3 shows the results of the analysis after the test. No powder formation was observed in any of Examples 12 to 14, and the crystal phase remained the c phase therein. These results are the same as those of Example 5, indicating that the same effect as that achieved in the case where CeO₂ doped can be achieved, also when a lanthanoid oxide other than CeO₂ doped.

The electric conductivities of the solid electrolyte materials of Examples 5, 12, 13, and 14 were measured. Each solid electrolyte material was press molded, and sintered at 1450°C for 5 hr. Then, platinum electrodes were attached onto both surfaces thereof, and a reference electrode was attached onto a side surface thereof. The impedance was measured at 1000°C under atmospheric atmosphere.

**[Table 4]**

| | Composition | Electric conductivity at 1000°C (S/cm) |
|---|---|---|
| Example 5 | 10Y2CeSZ | 0.12 |
| Example 12 | 10Y2SmSZ | 0.11 |
| Example 13 | 10Y2YbSZ | 0.11 |
| Example 14 | 10Y2LaSZ | 0.10 |

Table 4 shows the results of the electric conductivities. The electric conductivity of Example 5 was the highest, indicating that ceria is the most preferable as the lanthanoid oxide doped.

### Regarding Two-Layer Structure of Solid Electrolyte Layer (Example 15)

### (1) Fabrication of First Layer

A ZrO₂ raw material (average particle diameter: 0.3 µm), a Y₂O₃ raw material (average particle diameter: 0.3 µm), and a CeO₂ raw material (average particle diameter: 0.3 µm) were weighed to give a 10Y0.5CeSZ composition represented by the general formula of by the general formula of 89.5 mol% (ZrO₂) -10 mol% (Y₂O₃) -0.5 mol% (CeO₂). Then, these raw materials were wet blended in an ethanol solvent for 50 hr, and dried and ground. Then, the blend was sintered at 1200°C. The sintered material was ground into a powder. Then, 5 wt% of a binder PVA was added to the powder, followed by mixing in a mortar. The powder containing the PVA was press molded at 50 MPa. Thus, a molded article having the 10Y0.5CeSZ composition was fabricated.

### (2) Fabrication of Second Layer

A ZrO₂ raw material (average particle diameter: 0.3 µm), a Y₂O₃ raw material (average particle diameter: 0.3 µm), and a CeO₂ raw material (average particle diameter: 0.3 µm) were weighed to give a 10Y2CeSZ composition represented by the general formula of by the general formula of 88 mol% (ZrO₂) -10 mol% (Y₂O₃) -2 mol% (CeO₂). These materials were wet blended in an ethanol solvent for 50 hr, and dried and ground. Then, the blend was sintered at 1200°C. The sintered material was ground into a powder. Then, 5 wt% of a binder PVA was added to the powder, followed by mixing in a mortar. The powder containing the PVA was press molded at 50 MPa. Thus, a molded article having a 10Y2CeSZ2Al composition was fabricated.

### (3) Fabrication of Cell

The molded article having the 10Y0.5CeSZ composition and serving as the first layer and the molded article having the 10Y2CeSZ composition and serving as the second layer were stacked on each other, thermally adhered to each other under pressure, and then sintered at 1450°C for 5 hr. The first layer was polished to a thickness of about 190 µm, and the second layer was polished to a thickness of about 10 µm. Then, a film of LSM (average particle diameter: 2 µm) was formed as an oxygen electrode layer on the surface of the first layer by screen printing so as to give a thickness of 20 µm after sintering, and a film of 40 wt% NiO-60 wt% YSZ (average particle diameter: 2 µm) was formed as a fuel electrode layer on the surface of the second layer by screen printing so as to form a cermet of Ni and YSZ and to give a thickness of 20 µm after sintering. Then, sintering was carried out at 1400°C for 2 hr.

### (Example 16)

Example 16 was conducted in the same manner as in Example 15, except for the following points. Specifically, the materials were weighed to give a 10Y0.5CeSZ composition represented by the general formula of by the general formula of 89.5 mol% (ZrO₂) -10 mol% (Y₂O₃) -0.5 mol% (CeO₂). These materials were wet blended in an ethanol solvent for 50 hr, and dried and ground. Then, the blend was sintered at 1200°C, and then ground. Then, together with the binder PVA, Al₂O₃ (average particle diameter: 0.5 µm) was mixed therewith in an amount equivalent to 0.5 mol% relative to the total amount of substances (total molar amount) of the zirconia, the yttria, and the lanthanoid oxide in the solid electrolyte material. Thus, a first layer having a 10Y0.5CeSZ0.5Al composition was fabricated. In addition, the composition of the second layer was likewise the 10Y0.5CeSZ1.5Al composition.

### (Example 17)

Example 17 was conducted in the same manner as in Example 15, except that the composition of the first layer was changed to a 10YSZ composition represented by the general formula of by the general formula of 90 mol% (ZrO₂) -10 mol% (Y₂O₃).

While the air was passed on the upper surface (on the first layer side) of the SOFC of each of Examples 15, 16, and 17, and 97% N₂+3% H₂ was passed on the lower surface (on the second layer side) thereof by using the testing apparatus shown in Fig. 6, the temperature of the electric furnace 106 was raised to 1000°C. While the air was passed on the upper surface (on the first layer side) of the SOFC, and a fuel gas (70% H₂+30% H₂O) was passed on the lower surface thereof, the temperature was kept at 1000°C for 600 hr. Then, while the air was passed on the upper surface (on the first layer side) of the SOFC, and 97% N₂+3% H₂ was passed on the lower surface thereof, the temperature was lowered to room temperature. After the SOFC 100 was peeled off from the glass seal 104, a surface of the solid electrolyte layer 102 of the SOFC 100, the surface having been in contact with the glass seal 104, was analyzed by SEM and Raman spectroscopy. Thus, the presence or absence of powder formation and the crystal phase were examined, and a comparison with Example 5 was made.

**[Table 5]**

| | Initial stage Crystal phase | 600 hr later Powder formation | Crystal phase |
|---|---|---|---|
| Example 5 | C | Absent | C |
| Example 15 | C | Absent | C |
| Example 16 | C | Absent | C |
| Example 17 | C | Absent | C |

Table 5 shows the results of the analysis after the test. No powder formation was observed in any of Examples 15 to 17, and the crystal phase remained the c phase therein. It was found that the powder formation and the crystal transformation were successfully suppressed by providing the second layer comprising the solid electrolyte material of the present invention in which no phase transformation occurred to the solid electrolyte material, which would have otherwise undergone the powder formation or the transformation to the t phase upon exposure to the fuel gas.

The electric conductivities of the solid electrolyte materials of Examples 5, 15, 16, and 17 were measured. Each solid electrolyte material was press molded, and sintered at 1450°C for 5 hr. Platinum electrodes were attached onto both surfaces thereof, and a reference electrode was attached onto a side surface thereof. The impedance was measured at 1000°C under atmospheric atmosphere.

**[Table 6]**

| | Electric conductivity at 1000°C (S/cm) |
|---|---|
| Example 5 | 0.12 |
| Example 15 | 0.13 |
| Example 16 | 0.13 |
| Example 17 | 0.14 |

Table 6 shows the results of the electric conductivities. It was found that the provision of the layer having a high oxygen ion conductivity to the first layer resulted in a higher electric conductivity than that of Example 5, so that the electric power generation efficiency was increased. From these results, it has been found that it is more effective to form the second layer in a thickness minimum necessary for preventing the powder formation peeling.

### (Example 18)

Example 18 was conducted in the same manner as in Example 15, except that the composition of the first layer was changed to a 10ScSZ composition represented by the general formula of 90 mol% (ZrO₂)-10 mol% (Sc₂O₃).

### (Example 19)

Example 19 was conducted in the same manner as in Example 15, except that the composition of the first layer was changed to a 10Sc1CeSZ composition represented by the general formula of 89 mol% (ZrO₂) -10 mol% (Sc₂O₃) -1 mol% (CeO₂).

While the air was passed on the upper surface (on the first layer side) of the SOFC of each of Examples 18 and 19, and 97% N₂+3% H₂ was passed on the lower surface (on the second layer side) thereof by using the testing apparatus shown in Fig. 6, the temperature of the electric furnace 106 was raised to 1000°C. While the air was passed on the upper surface (on the first layer side) of the SOFC, and a fuel gas (70% H₂+30% H₂O) was passed on the lower surface thereof, the temperature was kept at 1000°C for 600 hr. Then, while the air was passed on the upper surface (on the first layer side) of the SOFC, and 97% N₂+3% H₂ was passed on the lower surface thereof, the temperature was lowered to room temperature. After the SOFC was peeled off from the glass seal 104, a surface of the solid electrolyte layer 102 of the SOFC 100, the surface having been in contact with the glass seal 104, was analyzed by SEM and Raman spectroscopy. Thus, the presence or absence of powder formation and the crystal phase were examined, and a comparison with Example 5 was made.

**[Table 7]**

| | Initial stage Crystal phase | 600 hr later Powder formation | Crystal phase |
|---|---|---|---|
| Example 5 | C | Absent | C |
| Example 18 | C | Absent | C |
| Example 19 | C | Absent | C |

Table 7 shows the results of the analysis after the test. No powder formation was observed in any of Examples 18 and 19, and the crystal phase remained the c phase therein. It was found that the SOFC having the electrolyte two-layer structure and using scandia as the stabilizer of the first layer also achieved the same effect, when the second layer was formed of the solid electrolyte material of the present invention.

Effects of the present invention are described based on the SOFC of the type using the solid electrolyte layer as a support. However, the same effects are obtained also in SOFCs using an oxygen electrode layer or a fuel electrode layer as a support.

Regarding the design of the SOFC, the description is made based on the flat plate type. However, the same effects are obtained in the case of any type such as the flat tubular type, the tubular vertical-stripe type, and the microtube type.

In Examples shown above, the cases in each of which the YSZ electrolyte material was doped with only one lanthanoid oxide were tested. However, it is conceivable that the same effects as those in Examples shown above can be obtained also in a case where a YSZ electrolyte material is doped with a combination of two or more lanthanoid oxides.

### Reference Signs List

- 100: SOFC
- 101: oxygen electrode layer
- 102: solid electrolyte layer
- 103: fuel electrode layer
- 104: glass seal (SiO₂+B₂O₃)
- 105: zirconia tube
- 106: electric furnace
- 107: solid electrolyte layer (first layer)
- 108: solid electrolyte layer (second layer)
- 110: 10YSZ (cubic crystals)
- 111: 10YSZ (tetragonal crystals)
- 112: alumina (Al₂O₃)
- 113: 10Y0.5CeSZ (cubic crystals)
- 114: 10Y0.5CeSZ (tetragonal crystals)

## Claims

1. An yttria doped zirconia solid electrolyte material which mainly exists as cubic crystals, wherein
the yttria doped zirconia solid electrolyte material is further doped with a lanthanoid oxide.

2. The solid electrolyte material according to claim 1, wherein
the yttria doping is 8 to 15 mol% and the lanthanoid oxide doping is 1 to 5 mol%, relative to the total molar amount of the zirconia, the yttria, and the lanthanoid oxide in the solid electrolyte material.

3. The solid electrolyte material according to claim 2, wherein
the lanthanoid oxide is ceria.

4. The solid electrolyte material according to claim 2 or 3, further containing more than 1 mol% of alumina relative to the total molar amount of the zirconia, the yttria, and the lanthanoid oxide in the solid electrolyte material.

5. A solid oxide fuel cell comprising:
a solid electrolyte layer;
an oxygen electrode layer provided on one surface of the solid electrolyte layer; and
a fuel electrode layer provided on the other surface of the solid electrolyte layer, wherein
the solid electrolyte layer comprises the solid electrolyte material according to any one of claims 1 to 4.

6. The solid oxide fuel cell according to claim 5, wherein
the lanthanoid oxide doping at the fuel electrode side of the solid electrolyte layer is higher than the lanthanoid oxide doping at the oxygen electrode side of the solid electrolyte layer.

7. The solid oxide fuel cell according to claim 5, wherein
the solid electrolyte layer consists of two layers of a first layer formed at the oxygen electrode layer side and a second layer formed at the fuel electrode layer side, and
the lanthanoid oxide doping in the second layer is higher than the lanthanoid oxide doping in the first layer.

8. The solid oxide fuel cell according to claim 7, wherein
the second layer further contains more than 1 mol% of alumina, and
the amount of the alumina in the second layer is higher than the amount of alumina in the first layer.

9. The solid oxide fuel cell according to claim 8, wherein
the first layer is not doped with lanthanoid oxide, and contains no alumina.

10. The solid oxide fuel cell according to any one of claims 7 to 9, wherein
the first layer is thicker than the second layer.
